# EUROPÄISCHE PATENTSCHRIFT

(11) **EP 2 363 700 B1**
(45) Veröffentlichungstag und Bekanntmachung des Hinweises auf die Patenterteilung: **01.05.2019**
(21) Anmeldenummer: 11153257.8
(22) Anmeldetag: 03.02.2011
(51) Int. Cl.: G01N 21/47, G01N 21/35, G01N 21/77, G01N 21/81, G01M 11/00, G01M 3/04

(54) **Feuchtesensor und Verfahren zur Feuchtemessung**
Moisture sensor and method for measuring humidity
Capteur d'humidité et procédé de mesure de l'humidité

(30) Priorität: 04.02.2010 DE 102010000308
(43) Veröffentlichungstag der Anmeldung: 07.09.2011
(73) Patentinhaber: BAM Bundesanstalt für Materialforschung und -prüfung, 12205 Berlin (DE)
(72) Erfinder: Lenke, Philipp, 50259 Pulheim (DE); Liehr, Sascha, 12051 Berlin (DE); Wendt, Mario, 23554 Lübeck (DE)
(74) Vertreter: Zimmermann & Partner Patentanwälte mbB

(56) Entgegenhaltungen:
- GRATTAN K T V ET AL: "Polymer-Coated Fiber Bragg Grating for Relative Humidity Sensing", IEEE SENSORS JOURNAL, IEEE SERVICE CENTER, NEW YORK, NY, US, Bd. 5, Nr. 5, 1. Oktober 2005 (2005-10-01) , Seiten 1082-1089, XP011138571, ISSN: 1530-437X, DOI: DOI:10.1109/JSEN.2005.847935
- ARREGUI F J ET AL: "An experimental study about hydrogels for the fabrication of optical fiber humidity sensors", SENSORS AND ACTUATORS B, ELSEVIER SEQUOIA S.A., LAUSANNE, CH, Bd. 96, Nr. 1-2, 15. November 2003 (2003-11-15), Seiten 165-172, XP004473734, ISSN: 0925-4005, DOI: DOI:10.1016/S0925-4005(03)00520-3
- YEO T ET AL: "Optical fiber sensors for monitoring ingress of moisture in structural concrete", REVIEW OF SCIENTIFIC INSTRUMENTS, AIP, MELVILLE, NY, US, Bd. 77, Nr. 5, 26. Mai 2006 (2006-05-26), Seiten 55108-055108, XP012093068, ISSN: 0034-6748, DOI: DOI:10.1063/1.2200744
- MACLEAN A ET AL: "Distributed fiber optic sensors for humidity and hydrocarbon detection", PROCEEDINGS OF THE SPIE - THE INTERNATIONAL SOCIETY FOR OPTICAL ENGINEERING SPIE-INT. SOC. OPT. ENG. USA, Bd. 3986, 2000, Seiten 342-351, XP002633470, ISSN: 0277-786X
- MACLEAN A ET AL: "Hydrogel/fiber optic sensor for distributed measurement of humidity and pH value", PROCEEDINGS OF THE SPIE - THE INTERNATIONAL SOCIETY FOR OPTICAL ENGINEERING SPIE-INT. SOC. OPT. ENG. USA, Bd. 3330, 1998, Seiten 134-144, XP002633471, ISSN: 0277-786X
- Shinzo Muto ET AL: "Measurement Science and Technology A plastic optical fibre sensor for real-time humidity monitoring", Meas. Sci. Technol, vol. 14, 1 January 2003 (2003-01-01), pages 746-750, XP55490804,

## Beschreibung

Die vorliegende Erfindung betrifft einen Feuchtesensor und ein Verfahren zur Feuchtemessung mit einem faseroptischen Sensor, insbesondere mit einem Sensor mit einer optischen Polymerfaser.

Faseroptische Sensoren spielen zunehmend eine Rolle bei der Überwachung ausgedehnter Strukturen wie beispielsweise Gebäude, Dämme oder Deiche. Dabei werden die faseroptischen Sensoren insbesondere zur Dehnungsmessung verwendet, da sich die Streueigenschaften der Faser für verschiedene Dehnungszustände unterscheiden. Typischerweise werden für solche Untersuchungen Rückstreu-Meßverfahren eingesetzt. Diese Rückstreu-Meßverfahren erlauben, eine örtliche Verteilung der Meßgröße entlang der Faser zu erfassen. Unter den Rückstreu-Meßverfahren ist die optische Rückstreumessung im Zeitbereich, auch kurz OTDR (engl.: Optical Time Domain Reflectometry) die am weitesten verbreitete Meßtechnik. Beispielsweise wird beim OTDR-Verfahren ein kurzer Lichtpuls in die Faser eingestrahlt und das rückgestreute Licht als Funktion der Zeit aufgezeichnet. Die Laufzeit des Lichts in der Faser ergibt sich zu 2*d/c*n, wobei d die einfache Strecke entlang der Faser zur Streustelle, c die Lichtgeschwindigkeit und n die effektive Brechzahl in der Faser ist. Die Größe c/n entspricht also der effektiven Geschwindigkeit v des Lichts in der Faser. Auf diese Weise kann ein Bezug zwischen dem zeitlichen Verlauf und dem örtlichen Verlauf des Signals hergestellt werden und der Ort eines Streuzentrums in der Faser lokalisiert werden. Neben der Zeitbereichsanalyse (OTDR) sind dem Fachmann weiterhin die Korrelationsbereichsanalyse und die Frequenzbereichsanalyse als Rückstreu-Meßverfahren bekannt.

Typischerweise werden Glasfasern als optische Fasersensoren verwendet, wobei bereits faseroptische Dehnungssensoren aus Glasfaser im Stand der Technik bekannt sind. Allerdings sind Glasfasern nicht zur Messung größerer Dehnungen, beispielsweise über 1% geeignet. Im Gegensatz zu den Glasfasersensoren sind Sensoren auf Basis optischer Polymerfasern, kurz POF (engl.: Polymer Optical Fiber), auch zur Dehnungsmessung für Dehnungen bis über 45% geeignet.

Bei der oben beschriebenen Überwachung von Bauwerken, insbesondere von Erdbauwerken wie Kriechhängen, Dämmen oder im Tagebau, aber auch in Gebäuden aus Mauerwerk, wäre es wünschenswert, zusätzlich zur Dehnungsmessung auch eine Feuchtemessung vornehmen zu können. Feuchte ist häufig eine Ursache für Material- oder Strukturschädigung, wie etwa von Korrosion, Aufweichung oder Änderung der Tragfähigkeit. Wenn solche Schädigungen frühzeitig erkannt werden, können Gegenmaßnahmen eingeleitet werden, bevor ein Schaden entsteht. Feuchte kann auch ein Indikator für Fehlerquellen in technischen Geräten sein oder ein Risiko für Schimmelbildung und Verfall in Gebäuden anzeigen.

Yeo, Sun, Grattan et al. beschreiben im IEEE Sensor Journal, Band 5(5) October 2005, Seiten 1082 - 1089 ein polymerbeschichtetes faseroptisches Gitter zur Feuchtemessung, bei dem die Glasoberfläche eines Bragg-Gitters einer Faser mit einer quellfähigen Polymerschicht versehen wird. Arregui, Ciaurriz, Oneca und Matias beschreiben in Sensors & Actuators, B 2003, Band 96, Seiten 165 - 172 Hydrogele, die sich zur Herstellung faseroptischer Feuchtesensoren eignen, bei denen ein Abschnitt des Fasermantels durch das Hydrogel ersetzt wird. Yeo, Cox, Boswell et al. beschreiben in Revue of Scientific Instruments, 2006, Band 77 (5), Seiten 55108 - 055108 faseroptische Sensoren zur Überwachung des Feuchteeintritts in Betonstrukturen. Dabei wird ein faseroptisches Gitter mit einer quellfähigen Polymerschicht versehen und die Verschiebung der Bragg-Wellenlänge in Abhängigkeit vom Feuchtegehalt ausgewertet. Muto Z., Suzuki O., Amano T. und Morisawa M. beschreiben in Measurement Science and Technology 2003, vol. 14: Seiten 746-750 einen Polymerfasersensor zur Echt-Zeit-Feuchte-Überwachung.

Feuchtemessungen werden bislang mit elektrischen Sensoren oder faseroptischen Sensoren nur skalar ausgeführt, d.h. eine ortsaufgelöste Messung entlang einer Strecke ist nicht möglich. Vielmehr wird die Feuchte lediglich mit Punktsensoren an den jeweiligen Sensororten erfaßt. Die Überwachung ausgedehnter Strukturen mit Punktsensoren ist daher äußerst aufwendig, da viele Sensoren zur Abdeckung der Struktur benötigt werden. Jeder dieser Punktsensoren muß weiterhin einzeln verkabelt werden, was aufwendig ist und die Fehleranfälligkeit des Gesamtsystems erhöht. Weiterhin ist nicht ausgeschlossen, daß eine kritische Feuchte lediglich zwischen zwei Sensorpunkten auftritt und daher unerkannt bleibt.

Im Hinblick auf das oben Gesagte wird ein Feuchtemeßverfahren gemäß Anspruch 1, ein Meßsystem gemäß Anspruch 4 sowie ein Feuchtesensor gemäß Anspruch 7 bereitgestellt. Weitere Aspekte, Einzelheiten, Vorteile und Merkmale der vorliegenden Erfindung ergeben sich aus den Unteransprüchen, der Beschreibung sowie den beigefügten Zeichnungen.

Gemäß einem Ausführungsbeispiel der vorliegenden Erfindung wird ein Feuchtemeßverfahren für einen faseroptischen Sensor bereitgestellt. Das Feuchtemeßverfahren umfaßt das Bereitstellen von Rückstreu-Meßdaten einer optischen Polymerfaser, das Ermitteln eines Streuintensitätsprofils entlang der optischen Polymerfaser aus den Rückstreu-Meßdaten, das Vergleichen des ermittelten Streuintensitätsprofils mit einer Referenzintensität, um ein relatives Streuintensitätsprofil zu erhalten, und das Ermitteln eines Feuchtigkeitsprofils entlang der optischen Polymerfaser anhand des relativen Streuintensitätsprofils.

Mittels dieses Feuchtemeßverfahrens ist es möglich, die Feuchteverteilung entlang der Sensorfaser zu ermitteln. Auf diese Weise kann die Feuchte verteilt gemessen werden und durch eine einzelne Sensorfaser können eine große Anzahl herkömmlicher Punktsensoren ersetzt werden. Dies verringert den Material- und Installationsaufwand bei gleichzeitig geringeren Kosten. Da die Feuchte entlang der Sensorfaser ortsaufgelöst ermittelt wird, kann die Meßstrecke lückenlos überwacht werden. Weiterhin ist der faseroptische Sensor aus Polymerfaser mechanisch und chemisch robust sowie gegenüber elektromagnetischen Feldern unempfindlich.

Gemäß einer Weiterbildung umfaßt das Feuchtemeßverfahren weiterhin umfassend das Ermitteln eines Dämpfungsprofils entlang der optischen Polymerfaser aus den Rückstreu-Meßdaten, wobei das Feuchtigkeitsprofil auch mittels des Dämpfungsprofils ermittelt wird. Auf diese Weise wird die feuchtigkeitsabhängige Signaldämpfung einbezogen und die Genauigkeit des Verfahrens erhöht. Darüber hinaus erleichtert die Berücksichtigung der feuchtigkeitsabhängigen Dämpfung auch eine Trennung des Meßsignals in einen dehnungsabhängigen und einen feuchtigkeitsabhängigen Anteil.

Gemäß noch einer Weiterbildung wird zunächst eine erste Rückstreumessung von einem ersten Ende der optischen Polymerfaser her durchgeführt und anschließend eine zweite Rückstreumessung von einem zweiten Ende der optischen Polymerfaser her durchgeführt. Auf diese Weise kann die Genauigkeit der Feuchtemessung, d.h. insbesondere die Ortsauflösung der Messung, erhöht werden.

Die Referenzintensität wird anhand eines oder mehrerer Reflektoren, die in die optische Polymerfaser eingebracht sind, ermittelt.

Beispielsweise können diese Reflektoren mittels Steckverbindern gebildet sein. Als Reflektoren bzw. als Streuintensitätsreferenzen können auch Faserabschnitte eingefügt werden, die generell nicht auf Feuchte reagieren, wie etwa Glasfaserabschnitte, oder Abschnitte, die ausreichend gegen Feuchte geschützt sind. Alternativ wird die Referenzintensität anhand eines oder mehrerer Faserabschnitte, die eine Feuchtigkeit von 100% aufweisen, ermittelt. Beispielsweise kann ein Abschnitt der Sensorfaser in
Wasser gelagert sein. Auf diese Weise wird ebenfalls eine Streuintensitätsreferenz bereitgestellt. Insbesondere können sowohl "trockene" als auch "nasse" Referenzen bereitgestellt werden. Mittels der oben beschriebenen Intensitätsreferenzen kann die Genauigkeit der Messung erhöht werden.

Gemäß einem Aspekt der vorliegenden Erfindung umfaßt eine Meßvorrichtung eine optische Polymerfaser, eine Lichtquelle, die eingerichtet ist, Licht, insbesondere Lichtpulse, in die optische Polymerfaser einzuleiten, einen Detektor, der eingerichtet ist, aus der optischen Polymerfaser rückgestreutes Licht als Rückstreu-Meßdaten aufzunehmen, und eine Auswerteeinheit, die eingerichtet ist, auf den Rückstreu-Meßdaten ein Feuchtemeßverfahren gemäß einem Ausführungsbeispiel der vorliegenden Erfindung auszuführen. Insbesondere kann dabei die optische Polymerfaser als Bestandteil Polymethylmethacrylat (PMMA) aufweisen oder gemäß einem Ausführungsbeispiel vollständig aus PMMA bestehen. Wie bereits erwähnt kann die optische Polymerfaser zumindest einen Reflektor aufweisen, der eine Referenzstreuintensität bereitstellt.

Gemäß einem anderen Aspekt der vorliegenden Erfindung weist ein Feuchtesensor zumindest eine optische Polymerfaser auf, die in einer oben beschriebenen Meßvorrichtung verwendbar ist. Der Feuchtesensor umfaßt weiterhin eine im wesentlichen röhrenförmige Aufnahme, wobei die optische Polymerfaser im Inneren der Aufnahme im wesentlichen spannungsfrei gelagert ist. Die Aufnahme ist für Feuchtigkeit durchlässig. Beispielsweise ist die Aufnahme perforiert. Gemäß einer Ausführungsform ist der Innendurchmesser der Aufnahme so bemessen, daß für die zu messende Flüssigkeit kein Kapillareffekt auftritt.

Anhand der beigefügten Zeichnungen werden nun Ausführungsbeispiele der vorliegenden Erfindung erläutert. Dabei zeigt:
- Fig. 1: eine schematische Darstellung einer Meßvorrichtung gemäß einem Ausführungsbeispiel;
- Fig. 2: den zeitlichen Verlauf der relativen Streuintensität für verschiedene Feuchtegrade;
- Fig. 3: die gemessene Abhängigkeit der relativen Streuintensität und der Dämpfung von der Feuchte;
- Fig. 4: einen Querschnitt eines Feuchtesensors gemäß einem Ausführungsbeispiel;
- Fig. 5: eine schematische Darstellung der Anwendung des Feuchtesensors.

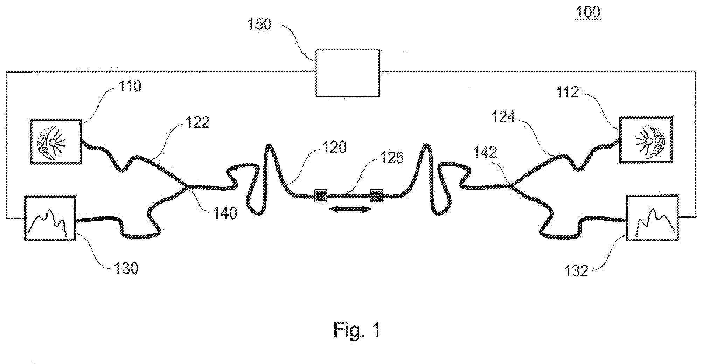

Die Fig. 1 zeigt eine schematische Darstellung einer Meßvorrichtung 100 gemäß einem Ausführungsbeispiel. Die Meßvorrichtung 100 umfaßt Lichtquellen 110, 112, die eingerichtet sind, Licht, und dabei insbesondere Lichtpulse, in einen optischen Fasersensor 120 einzuleiten. In dem vorliegenden Ausführungsbeispiel weist die Meßvorrichtung 100 eine erste Lichtquelle 110 auf, die Lichtpulse in ein vorderes Ende 122 der Sensorfaser 120 einleitet, sowie eine zweite Lichtquelle 112, die Lichtpulse in ein hinteres Ende 124 der Sensorfaser 120 einleitet. Es ist dabei zu beachten, daß Messungen am vorderen und am hinteren Ende der Sensorfaser 120 zeitlich hintereinander durchgeführt werden. Daher ist es auch möglich, daß das vordere Ende und das hintere Ende der Sensorfaser mit derselben Lichtquelle und demselben Detektor verbunden sind. Dieses Ausführungsbeispiel ist in Fig. 1 nicht gezeigt, jedoch dem Fachmann ohne weiteres geläufig. Grundsätzlich sind die Messungen jedoch auch durchführbar, wenn das Licht nur an einem Ende der Sensorfaser eingespeist wird.

In typischen Ausführungsbeispielen ist der Fasersensor als optische Polymerfaser (POF) ausgeführt. Dabei weist der POF-Sensor gemäß einem Ausführungsbeispiel als Bestandteil Polymethylmethacrylat (PMMA) auf. Gemäß alternativen Ausführungsformen kann der POF-Sensor auch ein Fluoropolymer oder ein Perfluorpolymer aufweisen. Weiterhin kann die optische Polymerfaser als Gradientenindexfaser oder als Stufenindexfaser ausgeführt sein. Gemäß einem Ausführungsbeispiel wird eine Sensorfaser aus PMMA mit einem Kerndurchmesser von 1 mm und einem Stufenindexpofil verwendet. Solche Fasern sind beispielsweise von den Firmen Mitsubishi, Toray und Asahi erhältlich. Die Fasern sind auch mit anderen Kerndurchmessern bei gleichem Material verfügbar. Die Fasern lassen sich ohne Beschädigung einige zehn Prozent dehnen (>45 %) und weisen eine mit der Dehnung stetig steigende Streuung auf. Weiterhin zeigen diese Fasern eine Dämpfung im Bereich von 160 dB/km bei der üblichen Wellenlänge von 650 nm. Darüber hinaus weiten sich die eingespeisten Lichtpulse aufgrund des Stufenindexprofils entlang der Faser stark auf. Eine Gradientenindexfaser aus PMMA mit 1 mm Kerndurchmesser ist von der Firma optimedia erhältlich. Diese Faser weist nur im Dehnbereich zwischen 1,5 % und 6 % erhöhte Streuung auf. Darüber hinaus ist diese Faser deutlich zerbrechlicher als die oben genannten Stufenindexfasern. Alle diese PMMA-Fasern werden typischerweise mit Lichtquellen 110, 112 verwendet, die im sichtbaren Wellenlängenbereich zwischen 400 nm und 700 nm arbeiten.

Polymerfasern können beispielsweise aus Thermoplasten hergestellt werden. Unter den Thermoplasten können neben PMMA beispielsweise auch optische Fasern aus Polycarbonat oder Polystyrol hergestellt werden. Weiterhin können auch optische Fasern aus zyklischen Polyolefinen hergestellt werden. Weitere Fluoropolymere, die zur Herstellung optischer Fasern geeignet sind, umfassen Hexafluoroisopropyl 2-Fluoroacrylat (HFIP 2-FA), Polytetrafluoroethylen (PTFE), Tetrafluoroethylen-Hexafluoropropylen (PFE) und Tetrafluoroethylen-Perfluoroalkylvinyl-Ether (PFA). Weiterhin können optische Fasern auch mit deuteriertem Polymer auf Basis von PMMA hergestellt werden. Neben diesen Thermoplasten können optische Fasern auch aus Elastomeren wie beispielsweise Polysiloxanen hergestellt werden.

Weiterhin umfaßt die Meßvorrichtung 100 Detektoren 130, 132, die eingerichtet sind, aus dem Fasersensor 120 rückgestreutes Licht als Rückstreu-Meßdaten aufzunehmen. Dabei kann es eine optische Rückstreumessung im Zeitbereich (OTDR), eine optische Rückstreumessung im Korrelationsbereich (OCDR), oder eine optische Rückstreumessung im Frequenzbereich (OFDR bzw. C-OFDR) durchgeführt werden. Insbesondere kann die Rückstreuung mit praktisch jedem Reflektometer gemessen werden, das eine Impulsantwort der Sensorfaser messen kann. Beispielhaft jedoch ohne Beschränkung der Allgemeinheit wird hier eine optische Rückstreumessung im Zeitbereich (OTDR) beschrieben. Dazu sind die Detektoren 130, 132 eingerichtet, das Streulicht zeitaufgelöst zu registrieren. Gemäß einem Ausführungsbeispiel sind sowohl am vorderen als auch am hinteren Ende der Sensorfaser 120 optische Koppler 140, 142 vorgesehen, die das Streulicht aus der Faser auskoppeln und an den jeweiligen Detektor 130, 132 leiten.

Schließlich umfaßt die Meßvorrichtung 100 noch eine Auswerteeinheit 150. Die Auswerteeinheit 150 erhält die von den Detektoren 130, 132 aufgenommenen Rückstreu-Meßdaten und ist eingerichtet, auf den Rückstreu-Meßdaten ein unten beschriebenes Feuchtemeßverfahren gemäß einem Ausführungsbeispiel der vorliegenden Erfindung auszuführen. Typischerweise umfaßt die Auswerteeinheit 150 einen Rechner, auf dem ein Computerprogramm ausgeführt wird, das das unten beschriebene Feuchtemeßverfahren durchführt. Die Auswerteeinheit 150 ist typischerweise weiterhin eingerichtet, aus den Rückstreu-Meßdaten ein Feuchteprofil der Sensorfaser 120 zu erhalten. Insbesondere wird das Feuchteprofil für eine Feuchtigkeit ausgesetzte Meßstrecke 125 der Sensorfaser 120 erhalten.

Die Meßvorrichtung 100 kann insbesondere zur Überwachung ausgedehnter Bauwerke verwendet werden. Dabei kann die Sensorfaser 120 auf Mauerwerk mit Schellen oder Putz oder Kleber befestigt sein. Die Sensorfaser kann jedoch auch in einem Textil, insbesondere in einem Geotextil, eingebettet sein. Im Erdreich können die Sensorfasern in Bohrlöcher integriert oder beim Bau verlegt werden. Gemäß anderen Ausführungsformen können die Fasern in Rohren, in textilen Seilen oder gar blank verlegt werden.

In einem ersten Schritt des Feuchtemeßverfahrens werden die Rückstreu-Meßdaten der optischen Polymerfaser 120 an die Auswerteeinheit 150 bereitgestellt. Die Auswerteeihneit 150 ermittelt dann ein Streuintensitätsprofil entlang der optischen Polymerfaser 120 aus den Rückstreu-Meßdaten. Beispielsweise kann dies mittels OTDR, OFDR, OCDR oder anderer Reflektometrieverfahren erfolgen. In einem nächsten Schritt wird nun die Streuintensität an einem jeweiligen Ort der Sensorfaser mit einer Referenzintensität verglichen, um eine relative Streuintensität an dem Ort zu erhalten. Diese Streuintensitätsreferenzen können beispielsweise als Reflektoren in der Faser ausgebildet sein. Ebenfalls können Faserabschnitte, die generell nicht auf Feuchte reagieren, wie etwa Glasfaserabschnitte, oder Abschnitte, die ausreichend gegen Feuchte geschützt sind, verwendet werden. Diese Intensitätsreferenzen sind sogenannte "trockene" Referenzen, da sie die Streuintensität für 0% Feuchte bzw. einen definierten niedrigen Feuchtigkeitswert wie etwa 20% bereitstellen. Zusätzlich oder alternativ kann die Referenzintensität anhand eines oder mehrerer Faserabschnitte, die eine Feuchtigkeit von 100% aufweisen, ermittelt werden. Diese Referenzen können als "nasse" Referenzen bezeichnet werden. Beispielsweise kann ein Abschnitt der Sensorfaser in Wasser gelagert sein. Auf diese Weise wird ebenfalls eine Streuintensitätsreferenz bereitgestellt. Insbesondere können sowohl "trockene" als auch "nasse" Referenzen bereitgestellt werden. Mittels der oben beschriebenen Intensitätsreferenzen kann die Genauigkeit der Messung erhöht werden. Die Referenzstellen, beispielsweise Reflektoren, sind typischerweise in vorbestimmten Abständen, z.B. 10 m, voneinander beabstandet auf der Sensorfaser 120 angeordnet. Je nach Fasertyp müssen auch gewisse Mindestabstände zwischen den Referenzen eingehalten werden. In einem abschließenden Schritt wird nun eine Feuchtigkeitsprofils entlang der optischen Polymerfaser anhand des relativen Streuintensitätsprofils ermittelt.

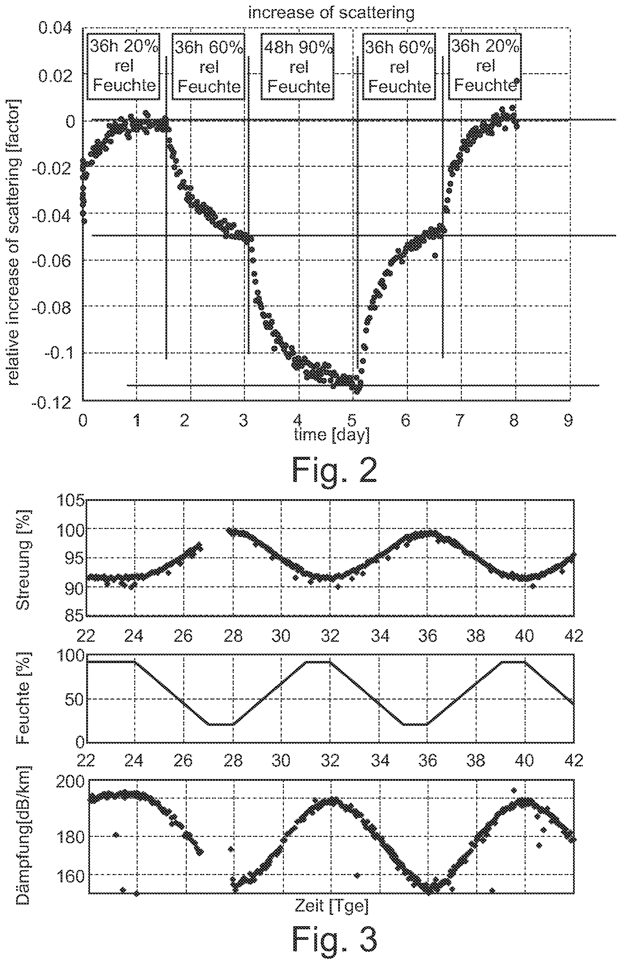

In Fig. 2 ist der zeitliche Verlauf der relativen Streuintensität für verschiedene Feuchtegrade gezeigt. Dabei wurde zunächst die Faser für 36 h einer relativen Feuchte von 20%, dann für 36 h einer relativen Feuchte von 60%, anschließend für 48 h einer relativen Feuchte von 90%, dann für 36 h einer relativen Feuchte von 60% und abschließend für 36 h einer relativen Feuchte von 20% ausgesetzt. Es zeigt sich, daß sich die relative Rückstreuung auf einen für einen jeweiligen Feuchtegrad spezifischen Wert einstellt. Allerdings weist der zeitliche Verlauf für einen jeweiligen Feuchtegrad die Charakteristik einer Sättigungskurve auf. Dies hängt damit zusammen, daß die Feuchte eine gewisse Zeit benötigt, um vollständig in die Faser eindringen zu können. Es ist jedoch gut zu sehen, daß der Prozeß umkehrbar ist und keine offensichtlichen Hystereseeffekte aufweist.

In Fig. 3 ist die gemessene Abhängigkeit der relativen Streuintensität (oberer Graph) und der Dämpfung (unterer Graph) von der relativen Feuchte (mittlerer Graph) gezeigt. Wie bereits oben beschrieben, steigt die Streuintensität an, wenn die Feuchte sinkt bzw. sinkt ab, wenn die Feuchte größer wird. Genau umgekehrt verhält es sich mit der Dämpfung. Diese ist besonders groß bei hoher Feuchte und niedrig bei relativer Trockenheit.

Gemäß einer Weiterbildung der vorliegenden Erfindung wird weiterhin ein Dämpfungsprofil entlang der optischen Polymerfaser aus den Rückstreu-Meßdaten ermittelt. Dieses Dämpfungsprofil wird dann bei der Bestimmung des Feuchtigkeitsprofils mit verwendet. Durch Einbeziehen des Dämpfungsprofils können nämlich Dehnungseffekte und feuchtigkeitsinduzierte Effekte leichter voneinander getrennt werden. Ändert sich bei der Dehnung der Polymerfaser deren Rückstreuung, nicht aber ihre Dämpfung, so führt Feuchtigkeit dazu, daß sich sowohl Streuung als auch Dämpfung ändern. Durch Ausnutzen dieses Effekts kann daher die Genauigkeit der Messung erhöht werden.

Gemäß noch einer Weiterbildung der vorliegenden Erfindung wird zunächst eine erste Rückstreumessung von einem ersten Ende 122 der optischen Polymerfaser 120 her durchgeführt und anschließend eine zweite Rückstreumessung von einem zweiten Ende 124 der optischen Polymerfaser 120 her durchgeführt. Auf diese Weise kann die Genauigkeit der Feuchtemessung, d.h. insbesondere die Ortsauflösung der Messung, erhöht werden.

Die Referenzintensität wird anhand eines oder mehrerer Reflektoren, die in die optische Polymerfaser 120 eingebracht sind, ermittelt. Beispielsweise können diese Reflektoren mittels Steckverbindern realisiert sein. Als Reflektoren bzw. als Streuintensitätsreferenzen können auch Faserabschnitte eingefügt werden, die generell nicht auf Feuchte reagieren, wie etwa Glasfaserabschnitte, oder Abschnitte, die ausreichend gegen Feuchte geschützt sind. Alternativ wird die Referenzintensität anhand eines oder mehrerer Faserabschnitte, die eine Feuchtigkeit von 100% aufweisen, ermittelt. Beispielsweise kann ein Abschnitt der Sensorfaser in Wasser gelagert sein. Auf diese Weise wird ebenfalls eine Streuintensitätsreferenz bereitgestellt. Insbesondere können sowohl "trockene" als auch "nasse" Referenzen bereitgestellt werden. Mittels der oben beschriebenen Intensitätsreferenzen kann die Genauigkeit der Messung erhöht werden.

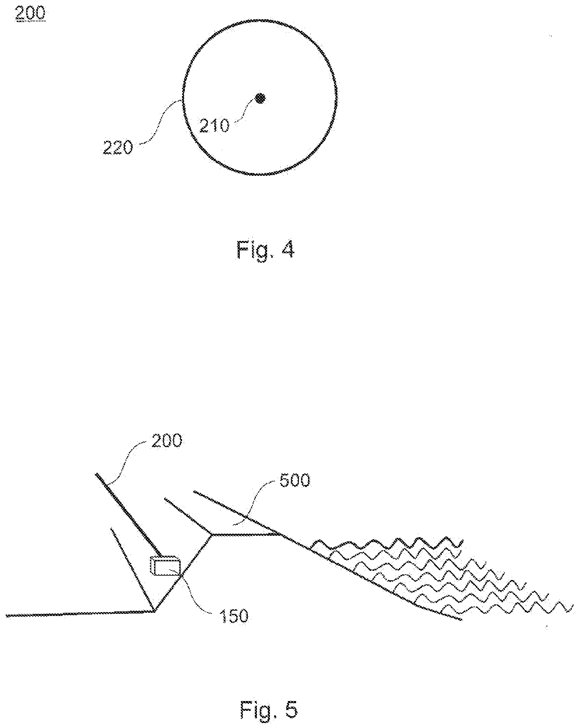

In Fig. 4 ist ein Querschnitt eines Feuchtesensors 200 gemäß einem Ausführungsbeispiel der vorliegenden Erfindung dargestellt. Der Feuchtesensor 200 weist eine optische Polymerfaser 210 auf. Die optische Polymerfaser 210 ist von dem oben beschriebenen Typ und zusammen mit einer Meßvorrichtung, wie sie beispielhaft anhand der Fig. 1 beschrieben wurde, verwendbar. Der Feuchtesensor 200 umfaßt weiterhin eine im wesentlichen röhrenförmige Aufnahme 220, die beispielsweise durch einen Kunststoffschlauch gebildet sein kann. Die optische Polymerfaser 210 ist im Inneren der Aufnahme 220 im wesentlichen spannungsfrei gelagert. Die Aufnahme 220 ist für Feuchtigkeit durchlässig. Beispielsweise ist eine Wandung der Aufnahme 220 perforiert. Durch die Perforation kann Wasser bzw. Feuchte in das Innere der Aufnahme 220 eindringen. Dort durchfeuchtet die Flüssigkeit die Sensorfaser 210. Ein durchfeuchteter Abschnitt der Polymerfaser 210 weist daher eine andere relative Rückstreuung und Dämpfung auf als ein Abschnitt der Sensorfaser in einem weniger feuchten Bereich. Dieser Unterschied kann mittels der Rückstreumessung zuverlässig erfaßt werden. Auf diese Weise ist es möglich, den Feuchteverlauf entlang der Sensorfaser zu ermitteln.

In Fig. 5 ist eine schematische Darstellung der Anwendung des Feuchtesensors zur Bestimmung der Durchfeuchtung in einem Deich 500 gezeigt. Wie oben beschrieben, ist ein Feuchtesensor 200 im Erdboden, d.h. im Deich, angeordnet. Der Grad der Durchfeuchtung des Deichs 500 läßt sich auf die oben geschilderte Weise nun leicht mittels des Sensors 200 und der Auswertungseinheit 150 bestimmen.

Die vorliegende Erfindung wurde anhand von Ausführungsbeispielen erläutert. Diese Ausführungsbeispiele sollten keinesfalls als einschränkend für die vorliegende Erfindung verstanden werden.

## Patentansprüche

1. Feuchtemeßverfahren für einen faseroptischen Sensor 200, umfassend
(a) Bereitstellen von Rückstreu-Meßdaten einer optischen Polymerfaser (120, 210);
(b) Ermitteln eines Streuintensitätsprofils entlang der optischen Polymerfaser (120, 210) aus den Rückstreu-Meßdaten;
(c) Vergleichen des ermittelten Streuintensitätsprofils mit einer Referenzintensität, um ein relatives Streuintensitätsprofil zu erhalten; und
(d) Ermitteln eines Feuchtigkeitsprofils entlang der optischen Polymerfaser (120, 210) anhand des relativen Streuintensitätsprofils,
(e) Ermitteln der Referenzintensität, wobei die Referenzintensität anhand eines oder mehrerer Reflektoren, die in die optische Polymerfaser (120, 210) eingebracht sind, oder anhand eines oder mehrerer Faserabschnitte, die eine Feuchtigkeit von 100% aufweisen, ermittelt wird.

2. Feuchtemeßverfahren nach Anspruch 1, weiterhin umfassend das Ermitteln eines Dämpfungsprofils entlang der optischen Polymerfaser (120, 210) aus den Rückstreu-Meßdaten, wobei das Feuchtigkeitsprofil auch mittels des Dämpfungsprofils ermittelt wird.

3. Feuchtemeßverfahren nach Anspruch 1 oder 2, wobei zunächst eine erste Rückstreumessung von einem ersten Ende der optischen Polymerfaser (120, 210) her durchgeführt wird und anschließend eine zweite Rückstreumessung von einem zweiten Ende der optischen Polymerfaser her durchgeführt wird.

4. Meßvorrichtung, umfassend
eine optische Polymerfaser (120, 210), umfassend:
- entweder einen oder mehrere Reflektoren, die in die optische Polymerfaser (120, 210) eingebracht sind, oder
- einen oder mehrerer Faserabschnitte, die eine Feuchtigkeit von 100% aufweisen,
eine Lichtquelle (110, 112), die eingerichtet ist, Licht in die optische Polymerfaser (120, 210) einzuleiten,
einen Detektor (130, 132), der eingerichtet ist, aus der optischen Polymerfaser (120, 210) rückgestreutes Licht als Rückstreu-Meßdaten aufzunehmen, und
eine Auswerteeinheit (150), die eingerichtet ist, auf den Rückstreu-Meßdaten ein Feuchtemeßverfahren nach einem der vorhergehenden Ansprüche auszuführen.

5. Meßvorrichtung nach Anspruch 4, wobei die optische Polymerfaser (120, 210) als Bestandteil Polymethylmethacrylat aufweist.

6. Feuchtesensor, umfassend eine Meßvorrichtung gemäß einem der Ansprüche 4 bis 5, sowie eine im wesentlichen röhrenförmige Aufnahme (220), wobei die optische Polymerfaser (210) im Inneren der Aufnahme (220) im wesentlichen spannungsfrei gelagert ist, und wobei die Aufnahme (220) für Feuchtigkeit durchlässig ist.

7. Feuchtesensor nach Anspruch 6, wobei die Aufnahme (220) perforiert ist.

## Claims

1. Moisture content measuring method for a fiber optic sensor 200, comprising:
(a) providing backscatter measurement data from an optical polymer fiber (120, 210);
(b) determining a scatter intensity profile along the optical polymer fiber (120, 210) from the backscatter measurement data;
(c) comparing the determined scatter intensity profile to a reference intensity to obtain a relative scatter intensity profile; and,
(d) determining a moisture content profile along the optical polymer fiber (120, 210) using the relative scatter intensity profile,
(e) determining the reference intensity,
wherein the reference intensity is determined using one or a plurality of reflectors that are added into the optical polymer fiber (120, 210) or using one or a plurality of fiber sections that have a moisture content of 100%.

2. The moisture content measuring method according to claim 1, further comprising determining a damping profile along the optical polymer fiber (120, 210) from the backscatter measurement data, the moisture content profile also being determined by means of the damping profile.

3. The moisture content measuring method according to claim 1 or 2, wherein initially a first backscatter measurement is performed from a first end of the optical polymer fiber (120, 210) and then a second backscatter measurement is performed from a second end of the optical polymer fiber.

4. A measuring device comprising
an optical polymer fiber (120, 210) comprising
- either one or a plurality of reflectors that are added into the optical polymer fiber (120, 210), or,
- one or a plurality of fiber sections that have a moisture content of 100%,
a light source (110, 112) that is designed to conduct light into the optical polymer fiber 120, 210),
a detector (130, 132) that is designed to absorb backscattered light from the optical polymer fiber (120, 210) as backscatter measurement data, and,
an evaluation unit (150) that is designed to conduct a moisture content measurement method on the backscatter measurement data according to any of the preceding claims.

5. The measuring device according to claim 4, wherein the optical polymer fiber (120, 210) has poly(methylmethacrylate) as a component.

6. A moisture content sensor comprising a measuring device according to either of claims 4 or 5 and an essentially tube-shaped receiving unit (220), the optical polymer fiber (210) being borne essentially tension-free in the interior of the receiving unit (220), and the receiving unit (220) being permeable to moisture.

7. A moisture content sensor according to claim 6, wherein the receiving unit (220) is perforated.

## Revendications

1. Procédé de mesure de l'humidité pour un capteur à fibre optique 200, comprenant
(a) la fourniture de données de mesure de rétrodiffusion d'une fibre optique polymère (120, 210) ;
(b) la détermination d'un profil d'intensité de diffusion le long de la fibre optique polymère (120, 210) d'après les données de mesure de rétrodiffusion ;
(c) la comparaison du profil d'intensité de diffusion déterminé avec une intensité de référence, pour obtenir un profil d'intensité de diffusion relatif ; et
(d) la détermination d'un profil d'humidité le long de la fibre optique polymère (120, 210) à l'aide du profil d'intensité de diffusion relatif,
(e) la détermination de l'intensité de référence,
où l'intensité de référence est déterminée au moyen d'un ou plusieurs réflecteurs qui sont introduits dans la fibre optique polymère (120, 210), ou au moyen d'un ou plusieurs segments de fibre qui présentent une humidité de 100 %.

2. Procédé de mesure de l'humidité selon la revendication 1, comprenant en outre la détermination d'un profil d'amortissement le long de la fibre optique polymère (120, 210) d'après les données de mesure de rétrodiffusion, où le profil d'humidité est déterminé aussi au moyen du profil d'amortissement.

3. Procédé de mesure de l'humidité selon la revendication 1 ou 2, où une première mesure de rétrodiffusion est réalisée tout d'abord depuis une première extrémité de la fibre optique polymère (120, 210) puis une seconde mesure de rétrodiffusion est réalisée depuis une seconde extrémité de la fibre optique polymère.

4. Dispositif de mesure, comprenant
une fibre optique polymère (120, 210) comprenant :
- un ou plusieurs réflecteurs, qui sont introduits dans la fibre optique polymère (120, 210), ou
- un ou plusieurs segments de fibre qui présentent une humidité de 100 %,
une source lumineuse (110, 112) qui est agencée pour introduire de la lumière dans la fibre optique polymère (120, 210),
un détecteur (130, 132) qui est agencé pour recevoir la lumière rétrodiffusée depuis la fibre optique polymère (120, 210) comme données de mesure de rétrodiffusion, et
une unité d'évaluation (150) qui est agencée pour mettre en oeuvre sur les données de mesure de rétrodiffusion un procédé de mesure de l'humidité selon l'une des revendications précédentes.

5. Dispositif de mesure selon la revendication 4, où la fibre optique polymère (120, 210) présente du poly(méthacrylate de méthyle) comme constituant.

6. Capteur d'humidité, comprenant un dispositif de mesure selon l'une des revendications 4 à 5 ainsi qu'un logement (220) sensiblement en forme de tube, où la fibre optique polymère (210) est montée à l'intérieur du logement (220) sensiblement sans tension, et où le logement (220) est perméable à l'humidité.

7. Capteur d'humidité selon la revendication 6, où le logement (220) est perforé.
